# EUROPEAN PATENT APPLICATION

(11) **EP 3 363 559 A1**
(43) Date of publication of application: **22.08.2018**
(21) Application number: 18155350.4
(22) Date of filing: 06.02.2018
(51) Int. Cl.: B22C 9/10, B22C 21/14, C04B 35/56, C04B 35/563, C04B 35/573, C04B 35/653

(54) **METHOD AND DEVICE FOR RETAINING POSITION OF A CONSUMABLE CORE**

(30) Priority: 21.02.2017 US 201715437696
(71) Applicant: General Electric Company, Schenectady, NY 12345 (US)
(72) Inventor: BENJAMIN, Marc Lionel, Greenville, SC South Carolina 29615 (US); RAUCH, Steven Charles, Greenville, SC South Carolina 29615 (US)
(74) Representative: Foster, Christopher Michael

(57) **Abstract**

A method and device for retaining position of a consumable core (100) during composite article manufacturing is taught herein by inserting a consumable core (100) having a consumable core body (102) and a plurality of retention artifacts (110) into a composite precursor hollow feature (104) of a composite precursor (106) structure. Then positioning the consumable core (100) such that the plurality of retention artifacts (110) projecting from the consumable core exterior surface (112) at least partially engage with a substantially spatially replicate surface geometry (114) in the composite precursor hollow feature (104). The consumable core (100) is then consumed as a soluble infiltrant to form a composite article.

## Description

### FIELD OF THE DISCLOSURE

The disclosure relates generally to turbomachines, and more specifically, to methods and devices for casting a cooled gas turbine structure using consumable cores.

### BACKGROUND OF THE DISCLOSURE

Investment casting is commonly used in the aerospace and power industries to produce gas turbine components such as blades or vanes having complex airfoil shapes and internal cooling passage geometries. The production of an investment cast gas turbine blade or vane involves producing a casting vessel having an outer shell with an inside surface corresponding to the airfoil shape, and can have one or more cores positioned within the outer shell corresponding to interior cooling passages to be formed within the airfoil. Molten alloy is introduced into the casting vessel and is then allowed to cool and to harden. The outer shell and core(s) are then removed by mechanical or chemical means to reveal the cast blade or vane having the external airfoil shape and hollow interior cooling passages in the shape of the core(s).

Removable cores are often used to form the inner surfaces of a composite precursor during fabrication of these gas turbine components including Ceramic Matrix Composite (CMC) components. In removable core systems, following formation of the composite article the removable core must be withdrawn from within the composite article. Some systems use removable cores which may be melted or burned out of the composite article via exposure to a heat source, some other systems require that the composite article itself include a structural hole large enough to accommodate withdrawal of the removable core. However, these methods may limit article design or performance, require additional steps in the manufacturing process, and/or expose components and portions of the composite article to thermal extremes which may damage or destroy the article.

Various other methods are known for fabricating silicon carbide based CMC components, including melt infiltration (MI), chemical vapor infiltration (CVI) and polymer pyrolysis (PIP) processes. Though these fabrication techniques significantly differ from each other, each involves the use of tooling or dies to produce a near-net-shape part through a process that includes the application of heat at various processing stages. As with turbine blades and vanes formed of more conventional superalloy materials, CMC blades and vanes are primarily equipped with cavities and cooling passages to reduce weight which reduces centrifugal load and also to reduce component operating temperatures. These features are typically formed in CMC components using a combination of removable and expendable tooling.

Known investment casting processes are expensive and time consuming, with the development of a new blade or vane design typically taking many months and hundreds of thousands of dollars to complete. Furthermore, design choices are restricted by process limitations in the production of ceramic cores and wax patterns.

### BRIEF DESCRIPTION OF THE DISCLOSURE

Aspects and advantages of the disclosure will be set forth in part in the following description, or may be obvious from the description, or may be learned through practice of the disclosure.

In one embodiment, a method of retaining position of a consumable core during composite article manufacturing is taught by; inserting a consumable core having a consumable core body and a plurality of retention artifacts into a composite precursor hollow feature of a composite precursor structure; positioning the consumable core such that the plurality of retention artifacts projecting from the consumable core exterior surface at least partially engage with a substantially spatially replicate surface geometry in the composite precursor hollow feature; connecting an external feed to the composite precursor structure to form a composite article manufacturing system; adjusting at least one environmental condition surrounding the composite article manufacturing system to infiltrate the composite precursor structure with infiltrant material from the consumable core; consuming the consumable core to form a composite article; and readjusting the environmental condition.

In another embodiment, a consumable core for hollow featured composite article manufacturing is taught as having a consumable core body positioned within a hollow feature of a composite precursor, the consumable core body having a plurality of retention artifacts projecting from the exterior surface and adapted to at least partially engage with a substantially spatially replicate surface geometry in the composite precursor; and wherein the core body has an infiltrant material having finite solubility in molten silicon.

These and other features, aspects and advantages of the present disclosure will become better understood with reference to the following description and appended claims. The accompanying drawings, which are incorporated in and constitute a part of this specification, illustrate embodiments of the disclosure and, together with the description, serve to explain the principles of the disclosure.

### BRIEF DESCRIPTION OF THE DRAWINGS

A full and enabling disclosure, including the best mode thereof, directed to one of ordinary skill in the art, is set forth in the specification, which makes reference to the appended figures, in which:
Fig. 1 is a is a schematic of a typical turbomachine gas turbine having combustors suitable for having embodiments disclosed herein;
Fig. 2 is a sketch of a typical consumable core with retention artifacts that nest in replicate surface geometry of a composite precursor when inserted;
Fig. 3 is a typical composite article manufacturing system using consumable cores; and
Fig. 4 is a flow diagram of a method for retaining position of a consumable core during composite article manufacturing.

Repeat use of reference characters in the present specification and drawings is intended to represent the same or analogous features or elements of the present disclosure.

### DETAILED DESCRIPTION OF THE DISCLOSURE

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, and the term "axially" refers to the relative direction that is substantially parallel to an axial centerline of a particular component. As used herein, the term "infiltrant" means silicon, or a silicon alloy comprised of a metal having a finite solubility in molten silicon, the metal being present up to the saturation point of the metal in the silicon, and the balance substantially silicon. For example, some of the metals having a finite solubility in molten silicon are boron, molybdenum, tungsten, chromium, titanium, zirconium, hafnium, aluminum, niobium, and tantalum.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents. Although exemplary embodiments of the present invention will be described generally in the context of an industrial gas turbine for purposes of illustration, one of ordinary skill in the art will readily appreciate that embodiments of the present invention may be applied to any turbomachine including but not limited to an aero-derivative turbine, marine gas turbine as well as an aero engine turbine, unless specifically recited in the claims. As indicated herein, aspects of the invention provide for systems, methods and devices adapted to ease manufacture of composite articles, particularly composite articles which include hollow features. These methods and systems use a consumable core adapted to fit within hollow features of a composite precursor, the consumable core applying infiltrant material to inner surfaces of the composite precursor and the core itself being consumed during the manufacturing process.

Embodiments of the current invention provide for methods which include the use of consumable cores having retention artifacts on the surface to hold the consumable core in position during the composite article manufacturing processes. The consumable core includes infiltrant precursor materials and is adapted to apply infiltrant material to inner surfaces of a composite precursor which includes a hollow feature. During manufacturing, the consumable core along with the retention artifacts are absorbed into the composite precursor (e.g., via absorption and capillary action) thereby self-consuming from within the composite precursor and becoming a part of the composite article itself while vacating the interior of the hollow feature leaving a net-shaped void. The consumable core taught herein does not require the use of thermoset resins or any form of known melt infiltration taught in the prior art. Distinctly, the consumable core taught herein is completely and entirely consumed as a soluble infiltrant in the composite precursor. Thus, the pre-consumed material interfaces between the consumable core and the composite precursor are fully integrated resulting in a net-shaped passage, void, or hollow feature in the composite article having no boundary layer. The consumable core simplifies the manufacturing process and eliminates the need for burn outs, melt outs, dissolution, secondary assembly, structural holes, melt infiltration or other methods of core removal as it forms composite articles whole. The retention artifacts hold the consumable core in position during the life of the consumable core to insure the net-shaped core maintains the pre-processing as-set position and orientation.

A consumable core for injection casting can be manufactured by first precision machining the desired core shape into mating core mold halves, then joining the mold halves to define an injection volume corresponding to the desired shape, and injecting an infiltrant into the injection volume. The casting materials used may include titanium alloys, nickel alloys (also called super alloys) and high strength steels.

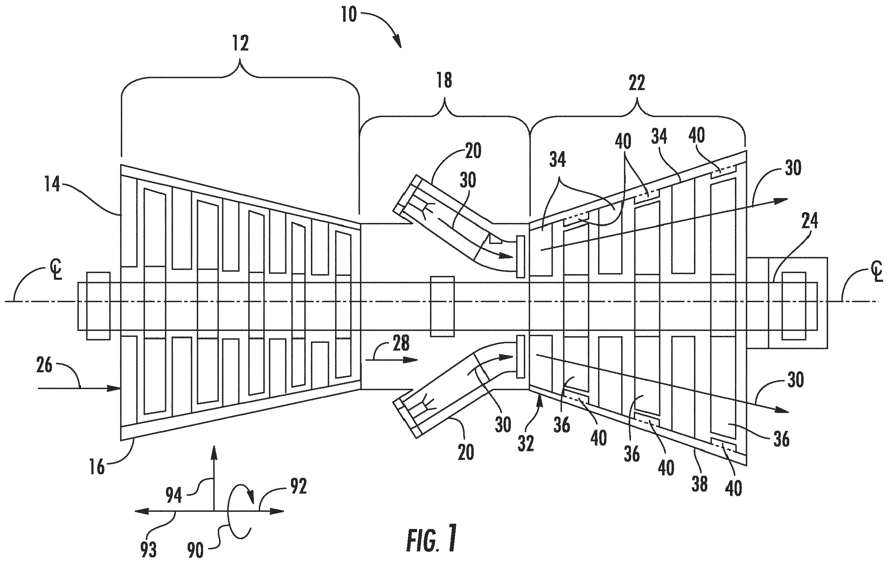

Referring now to the drawings, wherein like numerals refer to like components, Fig. 1 illustrates a turbomachine example being a gas turbine 10, as may incorporate various embodiments of the present invention. Directional orientation, consistent in all figures, is defined as circumferential direction 90, downstream axial direction 92, upstream axial direction 93, and radial direction 94. As shown, the gas turbine 10 generally includes a compressor section 12 having an inlet 14 disposed at an upstream end of the gas turbine 10, and a casing 16 that at least partially surrounds the compressor section 12. The gas turbine 10 further includes a combustion section 18 having at least one combustor 20 downstream from the compressor section 12, and a turbine section 22 downstream from the combustion section 18. As shown, the combustion section 18 may include a plurality of the combustors 20. A shaft 24 extends axially through the gas turbine 10.

In operation, air 26 is drawn into the inlet 14 of the compressor section 12 and is progressively compressed to provide a compressed air 28 to the combustion section 18. The compressed air 28 flows into the combustion section 18 and is mixed with fuel in the combustor 20 to form a combustible mixture. The combustible mixture is burned in the combustor 20, thereby generating a hot gas 30 that flows from the combustor 20 across a first stage 32 of turbine nozzles 34 and into the turbine section 22. The turbine section generally includes one or more rows of rotor blades 36 axially separated by an adjacent row of the turbine nozzles 34. The rotor blades 36 are coupled to the rotor shaft 24 via a rotor disk. A turbine casing 38 at least partially encases the rotor blades 36 and the turbine nozzles 34. Each or some of the rows of rotor blades 36 may be circumferentially surrounded by a shroud block assembly 40 that is disposed within the turbine casing 38. The hot gas 30 rapidly expands as it flows through the turbine section 22. Thermal and/or kinetic energy is transferred from the hot gas 30 to each stage of the rotor blades 36, thereby causing the shaft 24 to rotate and produce mechanical work. The shaft 24 may be coupled to a load such as a generator (not shown) so as to produce electricity. In addition or in the alternative, the shaft 24 may be used to drive the compressor section 12 of the gas turbine

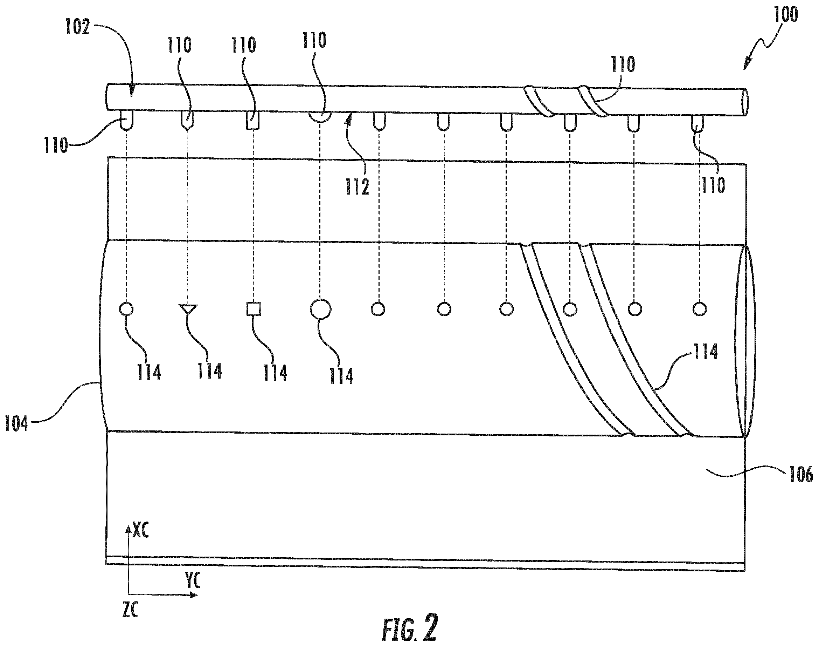

Embodiments of the composite article manufacturing methods and systems, including consumable cores cast in a cooled structure of a turbomachine, are shown in other figures. Each of the components in the figures may be connected via conventional means, e.g., via a common conduit or other known means as is indicated in Figs. 2-4. As shown in Fig. 2, a consumable core 100 for hollow featured composite article manufacturing has a consumable core body 102 positioned within a hollow feature 104 of a composite precursor 106, the consumable core body 102 having a plurality of retention artifacts 110 projecting from the exterior surface112 and adapted to at least partially engage with a substantially spatially replicate surface geometry 114 in the composite precursor 106. The core body 102 can be made from an infiltrant material having finite solubility in molten silicon. The consumable core 100 can be infiltrant material made from silicon, boron, molybdenum, tungsten, chromium, titanium, zirconium, hafnium, aluminum, niobium, tantalum and mixtures thereof. More specifically, the consumable core can be a sintered particulate of about 95% silicon and about 5% boron.

The consumable core plurality of retention artifacts 110 can be cylindrical projections, triangular projections, square projections, bump projections, spiral projections and mixtures thereof. When the consumable core 100 is placed in the hollow feature 104 of a composite precursor 106, the retention artifacts 110 at least partially engage with spatially replicate surface geometry 114 in the composite precursor 106 such that the consumable core 100 retains the as-set position. The retention artifacts 110 prevent the consumable core 100 from rotating and prevents movement in the axial direction during the composite article manufacturing process. The consumable core body 102 radial dimension is less than the composite precursor hollow feature 104 radial dimension in at least a portion of the composite precursor hollow feature 104 thereby allowing infiltrant to flow through the spacing between the consumable core exterior surface 112 and the composite precursor hollow feature 104. The plurality of retention artifacts 110 can project from the consumable core exterior surface 112 radially, circumferentially, and mixtures thereof.

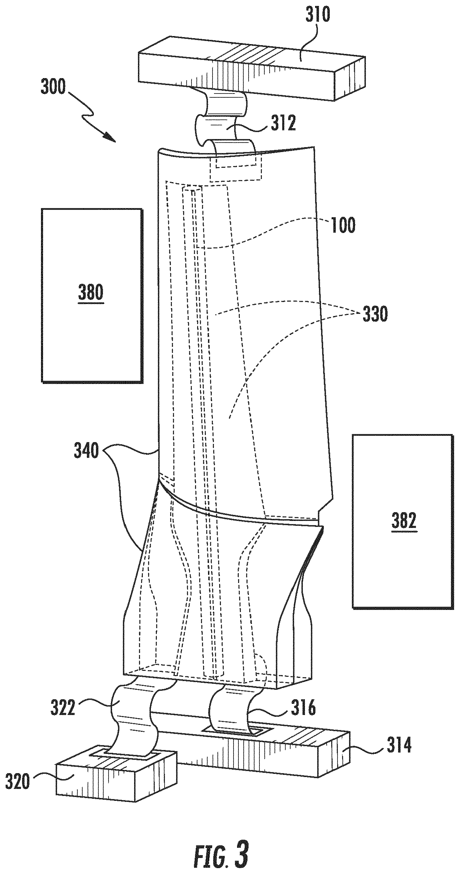

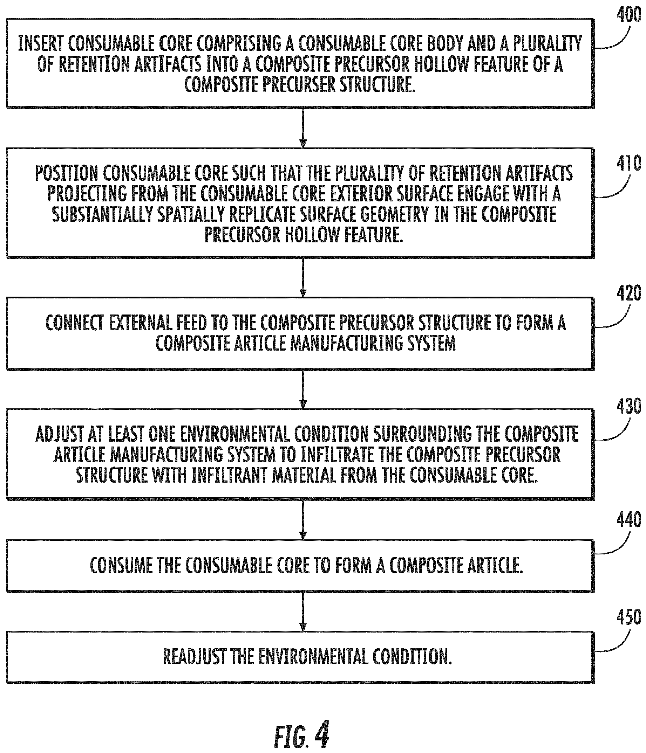

A method of retaining position of a consumable core 100 during composite article manufacturing, as shown in Fig. 4, can involve the steps of; 400 - inserting a consumable core 100 having a consumable core body 102 and a plurality of retention artifacts 110 into a composite precursor hollow feature 104; 410 - positioning the consumable core 100 such that the plurality of retention artifacts 110 projecting from the consumable core exterior surface 112 at least partially engage with a substantially spatially replicate surface geometry 114 in the composite precursor hollow feature 104; 420 - connecting an external feed to the composite precursor structure 340 (see Fig. 3) to form a composite article manufacturing system 300; 430 - adjusting at least one environmental condition surrounding the composite article manufacturing system 300 to infiltrate the composite precursor structure with infiltrant material from the consumable core 100; 440 - consuming the consumable core 100 to form a composite article; and 450 - readjusting the environmental condition. The consumable core 100 can be silicon, boron, molybdenum, tungsten, chromium, titanium, zirconium, hafnium, aluminum, niobium, tantalum and mixtures thereof. The step of consuming the consumable core 100 can further include integrating the pre-consumed material interface between the consumable core 100 and the composite precursor structure 340. The plurality of retention artifacts 110 can be cylindrical projections, triangular projections, square projections, bump projections, spiral projections and mixtures thereof, that can project from the consumable core exterior surface 112 radially, circumferentially, and mixtures thereof. In some embodiments, the consumable core body 102 radial dimension is less than the composite precursor hollow feature 104 radial dimension in at least a portion of the composite precursor hollow feature 104 thereby allowing infiltrant to flow through the spacing between the consumable core exterior surface 112 and the composite precursor hollow feature 104.

The method can further connect a reservoir 320 (see Fig. 3) to the consumable core 330 to drain excess infiltrant material from the consumable core 330. Further, the step of adjusting at least one environmental condition can include increasing a temperature of the environment, increasing a pressure of the environment, and mixtures thereof. Additional method steps can include disposing a set of external blocks 380, 382 substantially proximate the composite precursor structure 340, the external blocks 380, 382 adapted to supply a flow of airborne infiltrant material to the composite precursor structure 340.

The data flow diagram and block diagrams in the figures illustrate the architecture, functionality, and operation of possible implementations of systems and methods according to various embodiments of the present invention. In this regard, each block in the flowchart or block diagrams may represent a module, segment, or portion of method, which comprises one or more executable steps for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

In Fig. 3, a schematic three-dimensional perspective view of a composite article manufacturing system 300 including a consumable core 330 (shown in phantom) internalized within a composite precursor structure 340 is shown according to embodiments of the invention. Consumable core 330 is similar in function and form to consumable core 100 in Fig. 2, thus can include a plurality of retention artifacts 110. Composite precursor structure 340 is similar to composite precursor 106 in Fig. 2 and can include hollow feature 104 as well as spatially replicate surface geometry 114. In the embodiment of Fig. 3, a set of external blocks 380 and 382 are disposed about composite precursor structure 340 and adapted to apply infiltrant material to external surfaces of composite precursor structure 340. Additional infiltrant blocks 380 and 382 may be similar in material composition to consumable core 330. Application and/or inclusion of additional infiltrant blocks 380 and 382 may depend on the volume of infiltrant needed to completely fill capillaries within composite precursor structure 340. Composite precursor structure 340 is connected to a first external feed block 310 via wick 312 and a second external feed block 314 via wick 316. During manufacturing process, a high temperature may be applied to composite article manufacturing system 300 inducing infiltrant material (e.g., matrix) to introduce into composite precursor structure 340 (e.g., volumetric material) via consumable core 330, external feed block 310, external feed block 314, external block 380 and/or external block 382. As shown in Fig. 3, consumable core 330 and composite precursor structure 340 may be formed to produce any form of composite article including complex geometries, airfoils, turbine blades, etc. Infiltrant material may be introduced into composite precursor structure 340 via any of external block 380, external block 382, external feed block 310, external feed block 314, and consumable core 330, as needed to insure that infiltrant material surrounds all of the fibers of composite precursor structure 340 and fills all the interstices in a ceramic composite.

The composite precursor structure 340 may be a porous carbonized composite precursor adapted to form a composite article upon absorption of infiltrant material. Consumable core 330 is positioned within composite precursor structure 340 and may be connected to an external feed block 310 via a wick 312 (e.g., a permeable strip adapted to convey a molten mixture). Consumable core 330 may further be connected to a drain 322 (e.g., a permeable strip adapted to convey a molten mixture) that may include a reservoir 320. During formation of a composite article, composite article manufacturing system 300 may be subjected to a cycle of environmental conditions including fluctuations in heat and pressure. This cycle causes the infiltrant material to pass from feed block 310 to consumable core 330, causing consumable core 330 to absorb into composite precursor 340. Excess portions of infiltrant material may flow to reservoir 320 via drain 322. In one embodiment, material from consumable core 330 may absorb into composite precursor 140 via capillary action.

Composite precursor 340 may fully contain (e.g., enclose) consumable core 330. Consumable core 330 may be pressed, cast, or machined out of metals, silicon or any other material now known or later developed. Pre-forming may shape consumable core 330 to complement contours of a hollow feature 104 (Fig. 2) of composite precursor 106 (Fig. 2). A composition of consumable core 330 may include pure silicon or silicon plus alloying materials. In one embodiment, consumable core 330 may include silicon and boron. In another embodiment, consumable core 330 may include a sintered particulate and comprise about 95% silicon and about 5% boron. In another embodiment, consumable core 330 may include a composition of about 20% boron, 20% carbon, or 20% refractory metal (e.g., Ta, Zr, Nb, etc.) and a remainder of silicon. Consumable core 330 may be cast to a set size and shape prior to being internalized in composite precursor structure 340. It is understood that while consumable core 330 is described herein with regard to certain exemplary compositions and chemistries, these compositions and chemistries are merely illustrative and that any sintered chemistries, solid cast chemistries, and compositions now known or later developed may be included in consumable core 330.

Wick 312 and drain 322 may include similar materials and compositions, both being adapted to convey a molten mixture (e.g., molten silicon boron). In one embodiment, wick 312 and drain 322 may be interchangeable. Wick 312 and drain 322 may include inert materials which are woven or braided to form wick 312 and drain 322. In one embodiment, wick 312 and drain 322 may include woven carbon fiber.

This written description uses examples to disclose the invention, including the best mode, and also to enable any person skilled in the art to practice the invention, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following clauses:
1. A method of retaining position of a consumable core during composite article manufacturing, comprising;
   inserting a consumable core comprising a consumable core body and a plurality of retention artifacts into a composite precursor hollow feature of a composite precursor structure;
   positioning the consumable core such that the plurality of retention artifacts projecting from the consumable core exterior surface at least partially engage with a substantially spatially replicate surface geometry in the composite precursor hollow feature;
   connecting an external feed to the composite precursor structure to form a composite article manufacturing system;
   adjusting at least one environmental condition surrounding the composite article manufacturing system to infiltrate the composite precursor structure with infiltrant material from the consumable core;
   consuming the consumable core to form a composite article; and
   readjusting the environmental condition.
2. The method of clause 1, wherein the step of consuming the consumable core further comprises integrating the pre-consumed material interface between the consumable core and the composite precursor.
3. The method of clause 1, wherein the plurality of retention artifacts comprises cylindrical projections, triangular projections, square projections, bump projections, spiral projections and mixtures thereof.
4. The method of clause 1, wherein the consumable core body radial dimension is less than the composite precursor hollow feature radial dimension in at least a portion of the composite precursor hollow feature.
5. The method of clause 1, wherein the plurality of retention artifacts project from the consumable core exterior surface radially, circumferentially, and mixtures thereof.
6. The method of clause 1, further comprising connecting a reservoir to the consumable core to drain excess infiltrant material from the consumable core.
7. The method of clause 1, wherein the step of adjusting at least one environmental condition comprises, increasing a temperature of the environment, increasing a pressure of the environment, and mixtures thereof
8. The method of clause 1, wherein the consumable core comprises silicon, boron, molybdenum, tungsten, chromium, titanium, zirconium, hafnium, aluminum, niobium, tantalum and mixtures thereof.
9. The method of clause 1 wherein the consumable core comprises a sintered particulate of about 95% silicon and about 5% boron.
10. The method of clause 1, further comprising disposing a set of external blocks substantially proximate the composite precursor structure, the external blocks adapted to supply a flow of airborne infiltrant material to the composite precursor.
11. A consumable core for hollow featured composite article manufacturing, comprising;
   a consumable core body positioned within a hollow feature of a composite precursor, the consumable core body comprising a plurality of retention artifacts projecting from the exterior surface and adapted to at least partially engage with a substantially spatially replicate surface geometry in the composite precursor; and
   wherein the core body comprises an infiltrant material having finite solubility in molten silicon.
12. The consumable core of clause 11, wherein the infiltrant material comprises silicon, boron, molybdenum, tungsten, chromium, titanium, zirconium, hafnium, aluminum, niobium, tantalum and mixtures thereof.
13. The consumable core of clause 11, wherein the consumable core comprises a sintered particulate of about 95% silicon and about 5% boron.
14. The consumable core of clause 11, wherein the plurality of retention artifacts comprises cylindrical projections, triangular projections, square projections, bump projections, spiral projections and mixtures thereof.
15. The consumable core of clause 11, wherein the consumable core body radial dimension is less than the composite precursor hollow feature radial dimension in at least a portion of the composite precursor hollow feature.
16. The consumable core of clause 11, wherein the plurality of retention artifacts project from the consumable core exterior surface radially, circumferentially, and mixtures thereof.

## Claims

1. A method of retaining position of a consumable core (100) during composite article manufacturing, comprising;
inserting (400) a consumable core (100) comprising a consumable core body (102) and a plurality of retention artifacts (110) into a composite precursor hollow feature (104) of a composite precursor (106) structure;
positioning (410) the consumable core (100) such that the plurality of retention artifacts (110) projecting from the consumable core exterior surface (112) at least partially engage with a substantially spatially replicate surface geometry (114) in the composite precursor hollow feature (104);
connecting (420) an external feed (310) to the composite precursor (106) structure to form a composite article manufacturing system (300);
adjusting (430) at least one environmental condition surrounding the composite article manufacturing system (300) to infiltrate the composite precursor (106) structure with infiltrant material from the consumable core (100);
consuming (440) the consumable core (100) to form a composite article (340); and readjusting (450) the environmental condition.

2. The method of claim 1, wherein the step of consuming (440) the consumable core (100) further comprises integrating the pre-consumed material interface between the consumable core (100) and the composite precursor (106).

3. The method of claim 1 or 2, wherein the plurality of retention artifacts (110) comprises cylindrical projections, triangular projections, square projections, bump projections, spiral projections and mixtures thereof.

4. The method of any one of claims 1 to 3, wherein the consumable core body (102) radial dimension is less than the composite precursor hollow feature (104) radial dimension in at least a portion of the composite precursor hollow feature (104).

5. The method of any one of claims 1 to 4, wherein the plurality of retention artifacts (110) project from the consumable core exterior surface (112) radially, circumferentially, and mixtures thereof.

6. The method of any one of claims 1 to 5, further comprising connecting a reservoir (320) to the consumable core (330) to drain excess infiltrant material from the consumable core (330).

7. The method of any one of claims 1 to 6, wherein the consumable core (100) comprises silicon, boron, molybdenum, tungsten, chromium, titanium, zirconium, hafnium, aluminum, niobium, tantalum and mixtures thereof.

8. The method of any one of claims 1 to 7, wherein the step of adjusting (430) at least one environmental condition comprises, increasing a temperature of the environment, increasing a pressure of the environment, and mixtures thereof.

9. The method of any one of claims 1 to 8, further comprising disposing a set of external blocks (380, 382) substantially proximate the composite precursor structure (340), the external blocks (380, 382) adapted to supply a flow of airborne infiltrant material to the composite precursor (106, 340).

10. A consumable core (100) for hollow featured composite article manufacturing, comprising;
a consumable core body (102) positioned within a hollow feature (104) of a composite precursor (106), the consumable core body (102) comprising a plurality of retention artifacts (110) projecting from the exterior surface (112) and adapted to at least partially engage with a substantially spatially replicate surface geometry (114) in the composite precursor (106); and
wherein the core body (102) comprises an infiltrant material having finite solubility in molten silicon.

11. The consumable core (100) of claim 10, wherein the infiltrant material comprises silicon, boron, molybdenum, tungsten, chromium, titanium, zirconium, hafnium, aluminum, niobium, tantalum and mixtures thereof.

12. The consumable core (100) of claim 10 or 11, wherein the consumable core (100) comprises a sintered particulate of about 95% silicon and about 5% boron.

13. The consumable core (100) of any one of claims 10 to 12, wherein the plurality of retention artifacts (110) comprises cylindrical projections, triangular projections, square projections, bump projections, spiral projections and mixtures thereof.

14. The consumable core (100) of any one of claims 10 to 13, wherein the consumable core body (102) radial dimension is less than the composite precursor hollow feature (104) radial dimension in at least a portion of the composite precursor hollow feature (104).

15. The consumable core (100) of any one of claims 10 to 14, wherein the plurality of retention artifacts (110) project from the consumable core exterior surface (112) radially, circumferentially, and mixtures thereof
